# EUROPEAN PATENT SPECIFICATION

(11) **EP 1 279 492 B1**
(45) Date of publication and mention of the grant of the patent: **04.10.2006**
(21) Application number: 02255205.3
(22) Date of filing: 25.07.2002
(51) Int. Cl.: B32B 27/18, B44C 5/00, C08K 3/00

(54) **Decorative sheet**
Dekorschicht
Feuille décorative

(30) Priority: 25.07.2001 JP 2001223922
(43) Date of publication of application: 29.01.2003
(73) Proprietor: TOKUYAMA CORPORATION, Tokuyama-shi, Yamaguchi-ken (JP)
(72) Inventor: Higashi, Nobuhiko, Tokuyama-shi, Yamaguchi-ken (JP); Fujimoto, Tadashi, Tokuyama-shi, Yamaguchi-ken (JP)
(74) Representative: Boakes, Jason Carrington

(56) References cited:
- US-A- 6 063 472

## Description

The present invention relates to a decorative sheet which comprises a decorative layer which contains CaCO₃ as bonding ingredient, and a base sheet, and particularly to a decorative sheet which provides opacifying properties over unevenness of the surface of a wall, a column and a ceiling on which the decorative sheet is pasted, the decorative sheet being not peeled off the surface, gaps in seams being effectively prevented after a plurality of decorative sheets are continuously attached.

To finish walls, columns and ceilings made of CaSiO₃ boards and gypsum boards, polyvinyl chloride wall papers which can be easily constructed and are inexpensive are widely used, but the finished surface to which the wall papers are attached is not permeable, and condensation on the surface causes mold and peeling of the wall papers, which is disadvantageous. Recently, the wall papers and adhesives used for the attachment generates toxic volatile ingredients to cause various health hazards.

Instead of the wall papers, wet finishing material such as plaster which is permeable and does not generate toxic substance is used, but it takes a lot of time to solidify the wet finishing material to increase a term of construction. Also, finishing is variable depending on plasterer's skill. Lack of excellent plasterers has become serious and it does not meet with the need.

The inventors suggested a decorative sheet having a decorative layer which contains CaCO₃ that is a main ingredient of plaster on the surface of a base sheet to provide a design that is very similar to plaster finishing, as disclosed in International Pub. No.WO98/1296.

Walls are covered with the decorative sheets to provide excellent function and good design. The base sheet includes papers that have high strength such as original papers for gypsum board to prevent breakage during and after manufacturing of the decorative sheets.

To construct large area walls using the decorative sheets, there is a method of putting up a plurality of decorative sheets:
(a) Adjacent decorative sheets are overlapped at the ends and pasted.
(b) The overlapped portion of the decorative sheets is cut by a cutter to provide pasting of the decorative sheets without gap at the seams.

However, the decorative sheet in which the base layer comprises a gypsum board original paper provides opacifying properties over unevenness of the decorative surface. When the base sheet is thickened, the seam is opened with drying of paste to form a gap or is likely to peel off by curling the ends owing to a long-term use.

The inventors have carefully studied solution of the disadvantages. It has been found that, by thickening the base sheet to increase opacifying properties of the decorative sheet, strength is increased and that the decorative layer which has good stability in size is shrunk with shrinkage of the base sheet and portions that do not follow the shrinkage are peeled off by curling, because change in size during drying is controlled by high strength base sheet during moisturizing when high strength base sheet is used. Based on such knowledge, as a result of further study, a base sheet that is thick but has relative low strength can control stability in size of the decorative layer to provide a high stable decorative sheet against change in moisture after attachment, so that the inventors completed the present invention.

It is an aim of embodiments of the present invention to at least partly mitigate the above-mentioned problems.

It is an aim of the present invention to provide a decorative sheet in which a base sheet is thickened to provide opacifying properties over unevenness of the decorative surface, change in size after pasting to the decorative surface preventing peeling off and a gap in the seam effectively for a long time.

To achieve the aim, the inventors studied the material and found the following. To provide opacifying properties of the decorative sheet, the thicker the base sheet becomes, the higher its strength becomes. When such high strength base sheet made of papers is used, change in size during moisturizing or drying is controlled by the high-strength base sheet. The decorative layer that has good stability in size is shrunk and parts that do not follow the shrinkage are curled and peeled off. As further study based on the knowledge, thick but relatively low-tensile-strength base sheet can control stability in size of the decorative layer. High stability decorative sheet is obtained against change in moisturization after attachment.

The present invention provides a decorative sheet which comprises laminated material which comprises a decorative layer which contains CaCO₃ as bonding ingredient and a base sheet, said base sheet having thickness of 120 to 300 µm, tensile strength being 1.5 to 7 kN/m.

According to a first aspect of the present invention there is provided a decorative sheet in which a decorative layer which contains calcium carbonate as bonding ingredient is laminated on a base sheet, said decorative sheet being prepared by applying a mixture of calcium hydroxide and water on a surface of the base sheet and reacting the mixture with carbon dioxide to carbonate calcium hydroxide, thereby forming the solid decorative layer which contains calcium carbonate on the base sheet, characterized in that said base sheet is selected from among papers which contain inorganic filler of 30 to 90% by weight, said inorganic filler-containing paper having thickness of 120 to 300µm and tensile strength of 1.5 to 7kN/m.

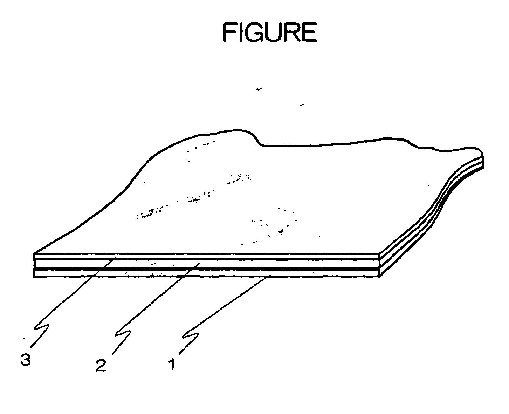

The features and advantages of the invention will become more apparent from the following description with respect to embodiments which are shown in appended drawing wherein:
The figure is a perspective view of a decorative sheet according to the present invention.

In the present invention, a decorative sheet contains calcium carbonate (CaCO₃), as bonding ingredient, formed by reaction of a mixture of calcium hydroxide and water with CO₂.

Carbonation of calcium hydroxide proceeds rapidly to about 50 % of reaction rate, and thereafter slowly. Function as bonding ingredient exhibits sufficient advantages when reaction rate of carbonation exceeds about 50 %. CaCO₃ in the decorative layer of the present invention contains what the reaction rate becomes more than 50 %, and especially what exceeds about 60 % is preferable.

Ca(OH)₂ is available as industrial slaked lime, plaster, and dolomite plaster.

The decorative sheet which contains CaCO₃ as bonding ingredient preferably has surface hardness of more than 45 degree and pencil hardness of more than B. The decorative layer which has such hardness can be formed by laminating a protective sheet on the surface and hardening them. The decorative layer improves scratch resistance remarkably and is suitable for the invention.

Various additives may be added to the decorative layer depending on use of constructive material. The additives include solid ingredient of aqueous emulsion, fibers, inorganic thin bone material, active microparticles and pigments.

The solid ingredient of the aqueous emulsion increases not only toughness of the decorative layer, but also bonding strength between the decorative layer and base sheet with peeling strength between the decorative layer and an air-permeable protective sheet. By mixing solid ingredient suitably in the aqueous emulsion, it is possible and suitable to adjust peeling/bonding strength of the decorative layer and permeable protective sheet within the range.

The aqueous emulsion may be an emulsion in which monomer, oligomer and polymer thereof are dispersed. The aqueous emulsion includes synthesized high-molecular emulsion of acrylic resin, vinyl acetate and stylene/butadiene rubber. When hardened body of CaCO₃ is formed, the medium in the aqueous emulsion is evaporated and at least part of the solid ingredient exists in the hardened material of CaCO₃.

The fibers include known fibers which can be mixed into the decorative layer. For example, there are glass fibers, vinylon fibers, polypropylene fibers, polyester fibers, polyethylene terephtalate fibers, acrylic fibers, alamide fibers, carbon fibers and metal fibers. As to shape of the fibers, short fibers, long fibers, woven fabrics and non-woven fabrics can be used. Especially, the short fibers are especially advantageous to increase toughness and cutting properties and suitably used. The length and diameter of the short fibers are not especially limited. But preferably the length may be 1 to 10 mm, especially 2 to 6 mm, and the diameter may be 5 to 50 µm, especially 10 to 30 µm to increase toughness of the decorative layer and to provide excellent cutting properties.

The inorganic thin bone material includes CaCO₃ (that does not act as bonding ingredient) having average diameter of 0.001 to 2 mm; quartz sand; cold water sand; mica; sesode quarts sand; sesode mica; ceramic sand; glass beads perlites. When the base material comprises a sheet, the average diameter may be preferably 0.003 to 1.0 mm, and when the base material comprises a sheet, and when the decorative layer does not substantially contain fibers and has thickness of 0.1 to 1 mm, the average particle diameter may be preferably 0.003 to 0.5 mm. Furthermore, the active particle includes blast furnace water granulated slag; fly ash and silica fume having average particle diameter of 0.1 to 50 µm.

The pigments include metal oxides such as iron oxide, titanium oxide and chromium oxide having average diameter of 0.5 to 50 µm, and stone powders.

The other additives include organic miscible material such as paraffin; calcium stearate and magnesium stearate; silicone oil or silicone resins which mainly contain polysiloxane in which dimethyl polysiloxane and its methyl are partially replaced with hydrogen, phenyl, alkyl, mercapto, vinyl, cianoalkyl or fluoroalkyl; organoalkoxy silane such as methyltrimethoxy silane; ethyl trimethoxy silane, dimethyldimethoxy silane, diethyldimethoxy silane, butyltrimethoxy silane, hexyltrimethoxy silane, heptyltrimethoxy silane, octyltrimethoxy silane, dihexyldimethoxy silane, diheptyldimethoxy silane, and trihexylmethoxy silane.

The content of the additive is not limited. Generally the following ratio is preferable in the decorative layer. The ratio is calculated by the condition where the total amount of Ca(OH)₂ is carbonated to convert CaCO₃.

The aqueous emulsion may be added at 0.5 to 18 % by weight, preferably 2 to 15 % by weight under conversion to solid ingredient so as to increase toughness of the decorative layer, bonding strength between the decorative layer and the base material, and peeling strength between the decorative layer and the sheet.

The fibers may be preferably added at 0.1 to 5 % by weight in case of short fibers, but in case that the base material comprises a sheet and thickness of the decorative layer is 0.1 to 1 mm, flexibility of constructive material can be substantially assured without adding fibers.

The inorganic thin bone material may be added at less than 70 % by weight, preferably less than 60 % by weight. The pigment of less than 5 % by weight can be used without problem.

As other additives, organic miscible agent, silicone oil, silicone resin and organoalcoxy silane are advantageous to increase waterproofness, freezing-fusion resistance, chemical resistance and weather resistance, and may be added at 0.05 to 2 % by weight in the decorative layer of CaCO₃.

In the present invention, when any of the additives are added to the decorative layer, CaCO₃ (calculated at 100 % carbonated condition of Ca(OH)₂ similar to the above) which acts as bonding agent may be added at more than 10 % by weight, preferably 25 % by weight, more preferably 30 % by weight so as to imitate design on the surface of the decorative layer to plaster finishing.
In the present invention, the decorative layer which contains CaCO₃ as bonding ingredient may preferably have thickness of 100 to 2000 µm, preferably 100 to 1000 µm so as to increase bending resistance by laminating a permeable protective sheet (will be described later) at the above peeling strength without substantially containing fibers.
In the present invention, the decorative layer in unhardened slurry can be applied on one surface to harden the base sheet and hardened to laminate on the base sheet.

The features of the present invention is that the base sheet has tensile strength of 1.5 to 7 kN/m, preferably 3 to 5 kN/m compared with a known base sheet which has tensile strength of more than 10 kN/m for the purpose of opacifying unevenness of the surface. If the tensile strength of the base sheet is more than 7kN/m, size stability of the decorative sheet is controlled by the base sheet after attachment, so that a seam is opened gradually with drying after attachment of the decorative sheet with paste and a gap can be seen. The gap that exceeds 0.05 mm defaces seam of the decorative sheet after construction,

On the contrary, if tensile strength of the base sheet is less than 1.5 N/m, strength in manufacturing is not sufficient, and the decorative sheet cannot be stably manufactured.

In the specification, tensile strength of the base sheet is determined in the strongest direction, and when the base sheet is continuously manufactured, it is longitudinal tensile strength in manufacturing.

In the present invention thickness of the base sheet having the above tensile strength is 120 to 300 µm, especially 130 to 180 µm so as to increase adhesiveness when it is pasted to a wall, to form a stable finishing surface. Thickness of a known base sheet was at most 100 µm.

If the base sheet is too thin, it becomes difficult to absorb unevenness of the wall surface on which the decorative sheet is attached, and the decorative layer is partially floated to cause cracks. If the base sheet is too thick, the decorative layer becomes unstable after attachment, and cracks are likely to occur when the surface is pressed.

It is the features of the present invention that the base sheet has specific thickness and relatively low tensile strength, which has been suggested for the first time by the present invention.

In the present invention, the base sheet is not especially limited if it meets with the above conditions, and water elongation is preferably less than 1 % and more preferably less than 0.8 % as mentioned below. If water elongation is too high, unhardened decorative layer that has insufficient strength is deformed such as curling by shrinkage of the base sheet to generate trouble in manufacturing. Such water elongation under the above range is preferable.

Air permeability is preferably less than 10 sec., especially 3 to 8 sec. for manufacturing.

The above water elongation and air permeability are determined by TAPPI-No.27-B and JIS-P8117.

In the present invention, the base sheet may be made of papers so as to fit the unhardened slurry and increase between the decorative layer and the base sheet. The decorative sheet according to the present invention is manufactured by applying unhardened slurry as mentioned above, and the base sheet on which the decorative sheet is laminated may preferably fit with the slurry rapidly from application of the unhardened slurry to hardening step so as to prevent creases on the base sheet during manufacturing.

In particular, it is preferable to use papers in which inorganic fillers such as CaCO₃ and Al(OH)₃ are contained at a lot of amount, such as 30 to 90 % by weight, preferably 40 to 70 % by weight to decrease combustibility.

It is most preferable to use CaCO₃ as inorganic filler.

Suitable base sheets that comply with the above conditions are OK Cosmo CA 135 and OK Cosmo CA 100 manufactured by Oji Paper Co., Ltd.

As shown in Figure, in the decorative sheet according to the present invention, a peerable air-permeable protective sheet 3 is laminated on the surface of the decorative layer 2 which contains CaCO₃ as bonding ingredient on the surface of the base sheet 1 so as to protect the decorative layer easily and prevent cracking effectively by bending in handling.

Peel strength of the air-permeable protective sheet laminated on the decorative sheet may be preferably 200 to 400 mN, more preferably 800 to 2500 mN.

Peel strength in the present invention is determined using a sample having width of 25 mm under the condition of 300 mm/min depending on 180°peel/bonding strength test of JIS-K6854.

In the present invention, the air-permeable protective sheet has substantially uniform air-permeability on the whole surface and does not give bad effect under the following condition. Significant deformation and deterioration do not occur by contact with mixture of Ca(OH)₃ and water of unhardened slurry of the decorative layer. Solid ingredient of the mixture does not substantially permeate the sheet. For example, the air-permeable protective sheet has air-permeability less than Gale permeability of 2000 sec/100cc, preferably 1 to 1000 sec/100cc and comprises synthesized papers which have no impermeable part of more than 3 mmΦ□preferably 2 mmΦ over the whole surface.

In this invention, the term "sheet" is not definitely distinguished from "film" in thickness. If it provides strength enough to form a protective sheet, its thickness is not especially limited.

The air-permeable protective sheets include non-water-permeable but air-permeable sheet in which micropores are formed to apply only air-permeability by known means such as a needle punch and drawing to non-water-permeable sheets which comprises membrane-like materials such as polyethylene and polypropylene and water-proof sheets. Other air-permeable protective sheets are fiber sheets of woven and non-woven fabrics which comprise artificial fibers such as polyethylene, polypropylene, polyester, vinylon, polyethylene terephtalate and alkali-resistant glass.

Preferably, the air-permeable protective sheets may be non-water-permeable sheets in which micropores are formed to apply air permeability to films such as polyethylene and polypropylene and air-permeable non-woven fabrics such as polyethylene, polypropylene, polyester, vinylon and polyethylene terephtalate.

The air-permeable protective sheets are laminated on the surface of the decorative layer at suitable peel strength as mentioned above, and during handling the decorative sheets, the air-permeable protective sheets can be handled without peeling the air-permeable protective sheets off the decorative layer, and after attachment, the air-permeable protective sheets can be easily peeled off without involving harmful influence to the decorative layer.

The decorative layer obtained by a process as below using the air-permeable sheet forms a CaCO₃ dense layer on the surface with suitable air-permeability of the air-permeable protective sheet to have high surface hardness and high scratch resistance even after the air-permeable protective sheets are removed.

The air-permeable protective sheet provides excellent bending resistance that makes a crack difficult to generate even if the decorative sheet is curved, thereby facilitating handling of the decorative sheet and construction of two-dimensional curved surface. There is no crack even if the air-permeable protective sheet is removed after constructed to two-dimensional curved surface, which is advantageous.

The decorative sheet according to the present invention can be applied with an adhesive on the surface, and it is preferable to form a known adhesive layer on the surface of the base sheet of the decorative sheet.

The method of manufacturing the decorative sheet according to the present invention is not especially limited, and the following methods are preferable.

Unhardened slurry of mixture that contains Ca(OH)₂ and water is applied onto the base sheet, and if required, an air-permeable protective sheet is laminated thereon. While the layer of the mixture is covered with the air-permeable protective sheet, Ca(OH)₂ in the mixture is carbonated and hardened.

For Ca(OH)₂, slaked lime, plaster and dolomite plaster that mainly contains Ca(OH)₂ may be used.

The foregoing additives may be added to the mixture of Ca(OH)₂ and water to provide a suitable ratio, if required.

Other than the additives, various agents may be added to improve efficiency in manufacturing of the constructive material. The agents include a thickener, a fluidizing agent and an antifoamer.

The thickeners include celluloses such as hydroxy ethyl cellulose and hydroxypropyl cellulose; polysaccharide that comprises saccharose or glucose; and acryls.

The fluidizing agents include methyrol/melamine condensates; polycarbonates; melamine sulfonic formaldehyde condensates; naphthalene sulfonic formaldehyde condensates and high molecular lignin sulfonic acid.

The antifoamers include pulronic-type, and polyoxyethylenealkylphenyl ether.

The addition of the agent is not limited, but the agent may be preferably added as below.

The addition of the thickener is variable depending on the function thereof, and hydroxy ethyl cellulose of 1 % by weight aqueous solution which has viscosity of 100 centi poise at 20 will not have any problem if it is added less than 0.04 % by weight.

The addition of the fluidizing agent is variable depending on the function of the fluidizing agent as used. For example, what mainly contains polycarbonate having relatively separation resistance may be preferably added at 0.1 to 5 % by weight, more preferably 0.5 to 3 % by weight.

The addition of the antifoamer may be preferably less than 1 % by weight, more preferably less than 0.3 % by weight.

Mixture is obtained by mixing Ca(OH)₂ and water that contains the above optional ingredients if required. The mixing ratio of Ca(OH)₂ and water is not especially limited, but adjusting water contents suitably to provide viscosity of the mixture to 100 to 40000 centi poise facilitates handling of the production. To achieve such viscosity, it may be mixed so that the water content may be 20 to 50 % by weight in the mixture.

To apply the mixture which contains Ca(OH)₂ and water to the base sheet, the mixture is applied to a board by a roll coater, a flow coater, a knife coater, a comma coater, a spray, dipping, spitting, bar transfer, and if necessary, molded by trowel pressing, mouth piece contraction, roller pressing and uniaxial press.

To cover the surface of the mixture of Ca(OH)₂ and water with the air-permeable protective sheet, there is a method of making closer to a sheet after molding the layer, or a method of making closer to the air-permeable protective sheet at the same time with the layer.

Under the above condition, the mixture of Ca(OH)₂ and water is hardened by allowing the mold of the mixture of Ca(OH)₂ and water to react with CO₂ in air to form CaCO₃. The hardening may be made under the condition that does not prevent carbonization, and curing time can be shortened by controlling temperature, moisture and CO₂ concentration.

The curing temperature is 25 to 90 at the beginning, preferably 50 to 80 for 2 to 120 min. to increase yield.

For hardening, it is important to remove excess water ingredient in the mold of the mixture and to supply CO₂. As mentioned above, the air-permeable sheet affects evaporation of water to the outside from the mold of the mixture and supply of CO₂, thereby shortening curing time and increasing surface hardness of the decorative layer.

In the method of the present invention, peel strength of the decorative sheet and air-permeable protective sheet can be suitably adjusted under various conditions. As effective conditions, there are hydrophilic nature and roughness of the surface of the air-permeable protective sheet with the decorative sheet; and control of aqueous emulsion to be added to the mixture and the additive such as silicone oil.

For example, by increasing hydrophilic nature of the surface of the air-permeable protective sheet to the decorative layer, peel strength is increased, and on the contrary, by decreasing hydrophilic nature, peel strength is decreased.

By increasing additional amount of the aqueous emulsion, peel strength is increased, and on the contrary, by decreasing the additional amount, peel strength is decreased. Furthermore, by decreasing addition of silicone oil, peel strength is increased, and on the contrary, by increasing the additional amount, peel strength is decreased.

### ADVANTAGES OF THE INVENTION

As understood by the above description, the decorative sheet according to the present invention includes a base sheet having specific thickness and strength, thereby decreasing elongation by water content of adhesive such as starch used for paste, so that shrinkage by drying after paste is very little.

Therefore, adhesion of a plurality of decorative sheets is maintained after drying to obtain good finishing and to keep a long time stabilty to prevent peeling off after attachment.

A stable wall is constructed as mentioned above. Thus, when decorative sheets are repapered, an additional decorative sheet is attached on the decorative sheet to enable a stable decorative surface to be formed, and enable very simple construction design to be taken as never considered in a known decorative sheet.

### EXAMPLES OF THE INVENTION AND COMPARATIVE EXAMPLES

To describe the present invention concretely, embodiments are mentioned, but the present invention is not limited to the embodiments.

Tests were carried out in examples and comparative examples by the following process.

Base sheets used in the tests have tensile strength, water elongation and thickness as shown in Table 1.

**Table 1**

| **Base Sheet** | | | | |
|---|---|---|---|---|
| Base sheet | | Tensile | Water elongation(%) | Thickness (µ) |
| No. | Paper | strength(kN/m) | | |
| 1 | CaCO₃ paper | 1.5 | 1.01 | 130 |
| 2 | CaCO₃ paper | 3.2 | 0.95 | 130 |
| 3 | Single-sided glossy paper | 5.0 | 1.05 | 130 |
| 4 | Single-sided glossy paper | 6.8 | 1.04 | 130 |
| 5 | Single-sided glossy paper | 7.3 | 1.21 | 130 |
| 6 | CaCO₃ paper | 1.6 | 0.89 | 150 |
| 7 | CaCO₃ paper | 3.7 | 0.72 | 150 |
| 8 | Single-sided glossy paper | 4.8 | 1.05 | 150 |
| 9 | Single-sided glossy paper | 6.7 | 1.02 | 150 |
| 10 | Single-sided glossy paper | 7.2 | 0.98 | 150 |
| 11 | Single-sided glossy paper | 1.8 | 0.79 | 170 |
| 12 | CaCO₃ paper | 3.3 | 0.73 | 170 |
| 13 | CaCO₃ paper | 5.3 | 0.98 | 170 |
| 14 | Single-sided glossy paper | 6.9 | 0.89 | 170 |
| 15 | Single-sided glossy paper | 7.5 | 1.11 | 170 |
| 16 | Ti paper | 2.0 | 1.20 | 100 |
| 17 | CaCO₃ paper | 4.3 | 1.09 | 100 |
| 18 | CaCO₃ paper | 3.8 | 1.18 | 110 |
| 19 | CaCO₃ paper | 3.2 | 1.03 | 120 |
| 20 | Single-sided glossy paper | 5.0 | 0.78 | 130 |
| 21 | CaCO₃ paper | 3.1 | 0.92 | 150 |
| 22 | CaCO₃ paper | 2.8 | 0.99 | 200 |
| 23 | CaCO₃ paper | 2.1 | 0.87 | 270 |
| 24 | CaCO₃ paper | 5.3 | 1.02 | 290 |
| 25 | CaCO₃ paper | 4.3 | 1.19 | 300 |
| 26 | CaCO₃ paper | 4.1 | 1.22 | 310 |
| 27 | CaCO₃ paper | 3.8 | 1.01 | 320 |
| 28 | CaCO₃ paper | 4.3 | 1.35 | 150 |
| 29 | CaCO₃ paper | 3.8 | 1.42 | 150 |

The base sheet Nos.7, 12, 16, 28 and 29 have air-permeability of 7, 6, 20, 7 and 8 sec.

Onto the surface of the base sheet, mixtures obtained by mixing materials by ratios in Tables 2 and 3 were applied by a roll coater, and air-permeable protective sheets were laminated to achieve thickness of 200µm after hardening.

Table 2 shows examples according to the present invention, and Table 3 shows comparative examples that are not included in the present invention. The base sheet number in column 2 of Tables 2 and 3 are the same as those described in Table 1.

**Table 2**

| **Examples of the Invention** | | | |
|---|---|---|---|
| Example | Base sheet No. | Air-permeable Protective sheet | Thickness of Decorative layer(µm) |
| 1 | 12 | Unwoven fabric A | 200 |
| 2 | 7 | Unwoven fabric B | 200 |
| 3 | 1 | Unwoven fabric A | 200 |
| 4 | 2 | Unwoven fabric A | 200 |
| 5 | 3 | Unwoven fabric A | 200 |
| 6 | 4 | Unwoven fabric A | 200 |
| 7 | 6 | Unwoven fabric A | 200 |
| 8 | 7 | Unwoven fabric A | 200 |
| 9 | 8 | Unwoven fabric B | 200 |
| 10 | 9 | Unwoven fabric A | 200 |
| 11 | 11 | Unwoven fabric A | 200 |
| 12 | 12 | Unwoven fabric A | 200 |
| 13 | 13 | Unwoven fabric A | 200 |
| 14 | 14 | Unwoven fabric A | 200 |
| 15 | 19 | Unwoven fabric A | 200 |
| 16 | 20 | Unwoven fabric A | 200 |
| 17 | 21 | Unwoven fabric A | 200 |
| 18 | 22 | Unwoven fabric A | 200 |
| 19 | 23 | Unwoven fabric A | 200 |
| 20 | 24 | Unwoven fabric A | 200 |
| 21 | 25 | Unwoven fabric A | 200 |
| 22 | 28 | Unwoven fabric A | 200 |
| 23 | 29 | Unwoven fabric A | 200 |
| 24 | 12 | Unwoven fabric A | 700 |

**Table 3**

| **Comparative Examples** | | | |
|---|---|---|---|
| Comparative Example | Base sheet No. | Air-permeable protective sheet | Thickness of decorative layer (µm) |
| 1 | 5 | Unwoven fabric A | 200 |
| 2 | 10 | Unwoven fabric A | 200 |
| 3 | 15 | Unwoven fabric A | 200 |
| 4 | 16 | Unwoven fabric A | 200 |
| 5 | 17 | Unwoven fabric A | 200 |
| 6 | 18 | Unwoven fabric A | 200 |
| 7 | 26 | Unwoven fabric A | 200 |
| 8 | 27 | Unwoven fabric A | 200 |

"Unwoven fabric A and B" are BT-1306WM by Unisel Co., Ltd. and Tybeck 1059B by Asahi DuPont Flashpsan Products Co., Ltd. respectively.

In all Examples of the invention and Comparative Examples except Examples 1, 2 and 8, the mixture contains 100 parts by weight of Ca(OH)₂, 60 parts by weight of inorganic thin bone material, 60 parts by weight of aqueous emulsion, 6 parts by weight of fluidizing agent and 16 parts by weight of water. Ca(OH)₂ is high purity slaked lime by Ube Material; inorganic thin bone material is "Ecal 100" by Iida Mfg., Co., Ltd.; aqueous emulsion is "Polytron A1480" by Asahi Kasei Industries, Ltd.; fluidizing agent is "Seacament 1000NT" by Nihon Seaca Co., Ltd.

Example 1 comprises 100 parts by weight of Ca(OH)₂ which is "Yukijirushi Sakanyo" by Tanaka Lime Industries, Ltd.; 60 parts by weight of inorganic thin bone material which is "Ecal 100" by Iida Mfg., Co., Ltd.; 60 parts by weight of aqueous emulsion which is "Mobinil 60" by Hexist Synthesis Co., Ltd. that comprises acryl styrene copolymer having 47 % by weight of solid ingredient.; 6 parts by weight of fludizing agent "Leobild SP-8N" by Pozolis Bussan Co., Ltd. Example 2 comprises 100 parts by weight of Ca(OH)₂ which is JIS R 9001-81; 60 parts by weight of inorganic thin bone material which is "White 7" by Yakuzen Lime; 70 parts by weight of aqueous emulsion which is "Polytron A1480" by Asahi Kasei Industries, Ltd.; 6 parts by weight of fluidizing agent is "Seacament 1000NT" by Nihon Seaca Co., Ltd. and 10 parts by weight of water. Example 8 is the same as Examples 3 to 7 and 9 to 24 except the inorganic thin bone material which is "White 7" by Yakuzen Lime.

### Test Procedures

The sample was dried for five minutes at 80 , and the mixture was hardened to form a decorative layer which contains CaCO₃ as bonding ingredient.
As shown in Figure, a decorative sheet thus obtained comprises a base sheet 1 and a decorative layer 2. A air-permeable protective sheet 3 is laminated on the surface of the decorative layer.

The air-permeable protective sheet 3 of the decorative sheet can be easily peeled off by pulling it by hand without breaking the decorative layer.

The decorative sheet thus obtained was left under the condition of relative humidity of 65 % at 25 so that carbonation rate or change rate from Ca(OH)₂ to CaCO₃ may be more than 75 %. Test results of the decorative sheet thus obtained are shown in Tables 4 and 5.

The following tests were carried out.

### (1) Peel strength test by repeating drying and moisturizing

The base sheet surface of a decorative sheet was pasted onto the whole surface of 150x300 mm transite, and a air-permeable protective sheet was peeled off. It was dried for 24 hours and a sample was obtained.

The obtained sample was moisturized for two hours in steam of temperature of 60 and humidity of 95 %. It was repeated 30 times that it was dried for two hours in a hot-air dryer of 60 . As a result of the test, the sample around which a twisted portion was not found was determined as " ", and the sample around which it was found was determined as "x".

### (2) Compulsory gap test

On the surface of 900×900 mm gypsum board, two decorative sheets which has 450x900 mm was pasted by a wall paper adhesive which is "Roormild" by Yayoi Chemical Industries Co., Ltd. without space, and the air-permeable protective sheet was peeled off to provide a sample.

The obtained sample was put into a hot-air dryer of 60 at once and stored for three hours. A gap in a seam was observed and determined by a microscope.

### (3) Opacifying property test of ground projections

A tack seal which has diameter of 30 mm and thickness of 0.1 mm was pasted on the middle portion of a gypsum board of 300×300 × 12 mm. The base sheet surface of the decorative sheet was pasted on the whole surface of the gypsum board by a wall paper adhesive which is "Roormild" by Yayoi Chemical Industries Co., Ltd. and the air-permeable protective sheet was peeled off.

Thereafter, the surface of the decorative sheet was observed under natural light, and the tack seal on which a projection was not found was determined as " ", and the tack seal on which a projection was found was determined as "x".

Table 4 shows results of the above tests (1), (2) and (3) carried out with respect to Examples according to the present invention, and Table 5 shows results of the above tests (1), (2) and (3) carried out with respect to Comparative Examples that are not included in the present invention.

**Table 4**

| **Test Results** | | | |
|---|---|---|---|
| **(Examples of the invention)** | | | |
| Example | Test results | | |
| | Peel strength (1) | Gap (mm) (2) | Opacifying properties(3) |
| 1 | | 0 | |
| 2 | | 0.01 | |
| 3 | | 0.01 | |
| 4 | | 0 | |
| 5 | | 0.01 | |
| 6 | | 0.03 | |
| 7 | | 0.01 | |
| 8 | | 0.01 | |
| 9 | | 0.01 | |
| 10 | | 0.03 | |
| 11 | | 0.01 | |
| 12 | | 0 | |
| 13 | | 0.02 | |
| 14 | | 0.03 | |
| 15 | | 0.01 | |
| 16 | | 0.01 | |
| 17 | | 0.01 | |
| 18 | | 0.02 | |
| 19 | | 0.01 | |
| 20 | | 0.02 | |
| 21 | | 0.01 | |
| 22 | | 0.01 | |
| 23 | | 0.01 | |
| 24 | | 0 | |

**Table 5**

| **Test Results (Comparative Examples)** | | | |
|---|---|---|---|
| Comparative Example | Test results | | |
| | Peel strength (1) | Gap (mm) (2) | Opacifying properties(3) |
| 1 | × | 0.05 | |
| 2 | × | 0.06 | |
| 3 | × | 0.06 | |
| 4 | | 0.01 | × |
| 5 | | 0.01 | × |
| 6 | | 0 | × |
| 7 | | 0.03 | |
| 8 | | 0.03 | |

When the gap exceeded 0.05 mm, a joint was observed to involve poor appearance.

In Comparative Examples 7 and 8 in which thickness of the base sheet exceeded 300 µ, the results were not so poor as shown in Table 5. But it is likely to collapse in thickness direction. When the surface of the decorative sheet was pressed by a finger, a crack was observed on the decorative layer. Comparative Examples 7 and 8 are found to be unsuitable as decorative sheet.

From the above, Examples of the present invention achieved good results, and Comparative Examples did not achieve good results.

From the foregoing results, it was proved that what has a base sheet having thickness of 120 to 300 µm and tensile strength of 1.5 to 7 kN was suitable as decorative sheet.

## Claims

1. A decorative sheet in which a decorative layer which contains calcium carbonate as bonding ingredient is laminated on a base sheet, said decorative sheet being prepared by applying a mixture of calcium hydroxide and water on a surface of the base sheet and reacting the mixture with carbon dioxide to carbonate calcium hydroxide, thereby forming the solid decorative layer which contains calcium carbonate on the base sheet, **characterized in that** said base sheet is selected from among papers which contain inorganic filler of 30 to 90% by weight, said inorganic filler-containing paper having thickness of 120 to 300 µm and tensile strength of 1.5 to 7kN/m.

2. The decorative sheet as claimed in claim 1 wherein the inorganic filler is calcium carbonate or aluminium hydroxide.

3. The decorative sheet as claimed in claim 1 or 2 wherein the amount of the inorganic filler is in the range of 40 to 70% by weight.

4. The decorative sheet as claimed in any one of claims 1 to 3 wherein the inorganic filler-containing paper has thickness of 130 to 180 µm.

5. The decorative sheet as claimed in any one of claims 1 to 4 wherein the inorganic filler-containing paper has tensile strength of 3 to 5kN/m.

6. The decorative sheet as claimed in any one of claims 1 to 5 wherein the base sheet has water elongation of less than 1.3%.

7. The decorative sheet as claimed in any one of claims 1 to 6 wherein a peelable air-permeable protective sheet is laminated on the surface of the decorative layer.

8. The decorative sheet as claimed in claim 7 wherein the air-permeable protective sheet has air permeability of less than 2000sec./100cc.

## Patentansprüche

1. Eine dekorative Lage, wobei eine dekorative Schicht, die Kalziumkarbonat als Haftmittel enthält, auf eine Grundlage laminiert ist, wobei die genannte dekorative Lage hergestellt wird, indem ein Gemisch aus Kalziumhydroxid und Wasser auf eine Oberfläche der Grundlage aufgetragen wird und das Gemisch mit Kohlendioxid zu karbonisiertem Kalziumhydroxid reagiert, wodurch die feste, Kalziumkarbonat enthaltende dekorative Schicht auf der Grundlage gebildet wird, **dadurch gekennzeichnet, dass** die genannte Grundlage aus Papieren gewählt wird, die 30 bis 90 Gewichtsprozent anorganischen Füllstoff enthalten, wobei das genannte Papier, das anorganischen Füllstoff enthält, eine Dicke von 120 bis 300 µm und eine Zugfestigkeit von 1,5 bis 7 kN/m aufweist.

2. Die dekorative Lage nach Anspruch 1, wobei der anorganische Füllstoff Kalziumkarbonat oder Aluminiumhydroxid ist.

3. Die dekorative Lage nach Anspruch 1 oder 2, wobei der Anteil des anorganischen Füllstoffs zwischen 40 und 70 Gewichtsprozent liegt.

4. Die dekorative Lage nach einem der Ansprüche 1 bis 3, wobei das Papier, das anorganischen Füllstoff enthält, eine Dicke von 130 bis 180 µm hat.

5. Die dekorative Lage nach einem der Ansprüche 1 bis 4, wobei das Papier, das anorganischen Füllstoff enthält, eine Zugfestigkeit von 3 bis 5 kN/m aufweist.

6. Die dekorative Lage nach einem der Ansprüche 1 bis 5, wobei die Grundlage eine Wasserausdehnung von weniger als 1,3 % aufweist.

7. Die dekorative Lage nach einem der Ansprüche 1 bis 6, wobei eine abziehbare luftdurchlässige Schutzlage auf die Oberfläche der dekorativen Schicht laminiert ist.

8. Die dekorative Lage nach Anspruch 7, wobei die luftdurchlässige Schutzlage eine Luftdurchlässigkeit von weniger als 2000 s/100 cm³ aufweist.

## Revendications

1. Feuille décorative, dans laquelle une couche décorative contenant du carbonate de calcium à titre de substance de liaisonnement, est stratifiée sur une feuille de base, ladite feuille décorative étant préparée suite à l'application d'un mélange d'hydroxyde de calcium et d'eau sur l'une des surfaces de la feuille de base et suite à l'action consistant à faire réagir le mélange avec du bioxyde de carbone en présence d'hydroxyde de carbonate de calcium, formant ainsi la couche décorative pleine qui contient du carbonate de calcium sur la feuille de base, **caractérisée en ce que** ladite feuille de base est sélectionnée parmi des papiers qui contiennent une charge inorganique de 30 à 90% par poids, ledit papier contenant la charge inorganique ayant une épaisseur de 120 à 300 µm et une résistance à la traction de 1,5 à 7 kN/m.

2. Feuille décorative, selon la revendication 1, dans laquelle la charge inorganique est constituée de carbonate de calcium ou d'hydroxyde d'aluminium.

3. Feuille décorative, selon la revendication 1 ou 2, dans laquelle la quantité de la charge inorganique se trouve dans la gamme allant de 40 à 70% par poids.

4. Feuille décorative, selon l'une quelconque des revendications 1 à 3, dans laquelle le papier contenant la charge inorganique a une épaisseur de 130 à 180 µm.

5. Feuille décorative, selon l'une quelconque des revendications 1 à 4, dans laquelle le papier contenant la charge inorganique a une résistance à la traction de 3 à 5 kN/m.

6. Feuille décorative, selon l'une quelconque des revendications 1 à 5, dans laquelle la feuille de base a une élongation due à l'eau qui est inférieure à 1,3%.

7. Feuille décorative, selon l'une quelconque des revendications 1 à 6, dans laquelle une feuille de protection pelable et perméable à l'air est stratifiée sur la surface de la couche décorative.

8. Feuille décorative, selon la revendication 7, dans laquelle la feuille de protection perméable à l'air a une perméabilité à l'air qui est inférieure à 2000 sec/100cm³.
